Europäisches Patentamt

European Patent Office

Office européen des brevets

(11) Publication number: **0 042 247**
**B1**

# (12) EUROPEAN PATENT SPECIFICATION

(45) Date of publication of patent specification: **03.10.84**

(21) Application number: **81302559.0**

(22) Date of filing: **09.06.81**

(51) Int. Cl.³: **B 28 B 7/00,** B 28 B 7/32, B 28 B 3/00

(54) **A method and apparatus for moulding an article.**

(30) Priority: **17.06.80 IE 1242/80**

(43) Date of publication of application:
**23.12.81 Bulletin 81/51**

(45) Publication of the grant of the patent:
**03.10.84 Bulletin 84/40**

(84) Designated Contracting States:
**AT BE CH DE FR GB IT LI LU NL SE**

(56) References cited:
FR-A-2 275 289
GB-A- 709 396
US-A-1 480 010
US-A-2 650 412
US-A-2 731 699
US-A-2 794 233
US-A-3 655 847
US-A-3 809 513

(73) Proprietor: **INSTITUTE FOR INDUSTRIAL RESEARCH AND STANDARDS**
**Ballymun Road**
**Ballymun, Dublin 9 (IE)**

(72) Inventor: **Price, John Francis**
**Knock Castletown**
**Navan County Meath (IE)**
Inventor: **Price, Arthur**
**Knock Castletown**
**Navan County Meath (IE)**
Inventor: **Price, James Cyprian**
**Knock Castletown**
**Navan County Meath (IE)**

(74) Representative: **Abbie, Andrew Kenneth et al**
**A.A. THORNTON & CO. Northumberland House**
**303/306 High Holborn**
**London, WC1V 7LE (GB)**

Courier Press, Leamington Spa, England.

## Description

The invention relates to moulding a frame of fibrous reinforced cementitious material.

The term fibrous reinforced cementitious material in this specification embraces any cementitious material which is reinforced with any fibres, for example glass fibres. It generally includes any water settable mixture reinforced with fibres which has for workability more water than required for the setting.

It has long been appreciated that the use of glass fibre reinforced cement (GRC) which is a mixture of portland cement, silica sand and water mixed with alkali-resistant glass fibres is particularly suitable for the production of many articles because it has a high strength-weight ratio so that it can be used for many applications where conventional concrete is too heavy and costly.

One of the major problems in moulding such articles whether from GRC or conventional concrete is to produce an adequate surface finish and the necessary strength. The purpose of dewatering is to remove excess water which is required in the moulding process to ensure adequate workability. However, since not all is necessary for the chemical reaction of the cement it has a diluting effect on the strength of the cement binder. Thus, the more water that is used in a concrete mix design the weaker the strength of that design. There is also a marked increase in drying shrinkage of the moulded component where excess water is used. Thus, to achieve a good surface finish it is well known that it is necessary to have a considerable amount of water in the mix and then when moulded to de-water or extract the excess water by pressing or vacuuming or both. This dewatering also leads to increased strength. Conventionally, the excess water is often forced to pass through a membrane of some kind which permits the water to pass through while holding back the solids forming the slurry of the cementitious mixture.

Using fibre reinforced cementitious material it is possible to obtain a moulded article having a high structural strength and a good surface finish. GRC is particularly suitable for the moulding of articles having elongate portions whose transverse dimensions are small relative to their lengths. Such portions can generally also be described as relatively narrow portions and hereinafter in the specification are referred to as elongate portions. Particularly suitable articles for moulding with GRC are, for example, though not exhaustively, window frames, door frames, both internal and external incorporating a door saddle, decorative wall units, shop front frames and the like articles hereinafter referred to as frames. It will be readily appreciated that if a complete window or door frame can be moulded that the building time then required to place it in situ is much less than with more conventional methods of building.

Problems have been encountered with the use of split moulds for GRC particularly where, if the two filled moulds are vibrated before being joined, the two subsequently mating surfaces do not adequately join together to form a coherent article, the joint forming a plane of weakness.

British Patent Specification No. 144892 (Thyssen) describes a method of moulding a frame of a fibre reinforced cementitious material, particularly GRC in a mould having mould parts which cooperate together when the mould is closed to provide a frame cavity which cavity comprises a plurality of interconnected elongate portions for forming corresponding interconnected elongate portions of the frame, the method comprising the steps of:

mixing a fibrous reinforced cementitious material with water,

filling the frame cavity with the mixture,

closing the mould, and

applying pressure to the mixture to consolidate the material within the frame cavity. A plurality of solid elongate members are used to apply pressure to the fibre reinforced cementitious mixture within the mould to consolidate the mixture by expelling some of the excess air in the mixture. The method and apparatus described in this specification suffers from several disadvantages, amongst which is the fact that the insertion and extraction of the elongate members is difficult as the mixture is allowed to set partially before insertion and is fully set on extraction. In addition, the pressure exerted on insertion of these elongate members cannot be quaranteed to compact the GRC adequately throughout the length of the members. It is also envisaged that a window frame moulded by the method and apparatus described in this specification will have a weakness at the parting line of the mould and hence a low structural strength.

An object of the invention is to provide a method of moulding a frame of a fibrous reinforced cementitious material which would be more efficient than heretofore known methods.

The present invention provides a method of moulding a frame of a fibrous reinforced cementitious material in a mould having mould parts which cooperate together when the mould is closed to provide a frame cavity which cavity comprises a plurality of interconnected elongate portions for forming corresponding interconnected elongate portions of the frame, the method comprising the steps of:

mixing a fibrous reinforced cementitious material with water,

filling the frame cavity with the mixture,

closing the mould, and

applying pressure to the mixture to consolidate the material within the frame cavity,

characterised in that the pressure is applied to the mixture by flexible inflatable tubing led around interconnected elongate portions of the frame cavity, which tubing is introduced into the mould before the mould is closed, the tubing being positioned on fibrous reinforced mixture in a mould cavity of one of the mould parts, and subsequently covered with further mixture, and the tubing being inflated after the mould is closed to form said interconnected elongate portions of the frame in said interconnected elongate portions of the frame cavity around the inflated tubing with a substantially uniform wall thickness of said fibrous reinforced cementitious mixture.

The invention also includes a moulding apparatus for performing a method in accordance with the invention, as defined in the preceding paragraph, the apparatus comprising a mould having mould parts which cooperate together when the mould is closed to provide a frame cavity which cavity comprises a plurality of interconnected elongate portions for forming corresponding interconnected elongate portions of the frame and means for applying pressure to a fibrous cementitious mixture in the frame cavity during moulding to consolidate the material in the frame cavity, characterised in that said pressure applying means comprises inflatable flexible tubing adapted to be led around interconnected elongate portions of the frame cavity prior to closure of the mould by being positioned on fibrous reinforced cementitious mixture in a mould cavity of one of the mould parts for subsequently covering with further mixture.

We have been made aware of US Patent Specification No. 3,655,847 which is concerned with a method for forming compressed concrete building panels such as floor slabs or wall panels. This method involved the use of an expandable core member which is positioned in a panel mould cavity whose size is maintained constant by a mould press whilst the core member is inflated using high pressure water and steam in order to pressurize the concrete in the cavity during its initial curing. Thus although this US Specification discloses the use of an inflatable core it does so in connection with the formation of compressed concrete building panels where the technical considerations differ greatly from those relating to the formation of frames from fibrous reinforced cementitious material.

We have also been made aware of US Patent Specification No. 1,480,010 which discloses a method of casting articles having elongate cavities which are not interconnected from cement or fibro cement using an inflatable core member. We understand that the term 'fibrocement' as used in this specification refers to asbestos cement which is a hardened mixture of asbestos fibres, portland cement and water which was generally used in relatively thin slabs for shingles, wall board and siding. The core member is not a flexible core but rather a rigid expandable core. The core comprises a rigid support surrounded by a rubber envelope which in turn is surrounded by four overlapping metal plates which although permitted to move relatively to one another on expansion of the envelope are not flexible. This US Specification does not disclose or suggest how a frame having a number of interconnected elongate cavities may be moulded from fibrous reinforced cementitious materials. Indeed, the examples shown and the apparatus described only disclose how articles having a plurality of substantially parallel elongate portions which are not in any way interconnected may be moulded. The cores used are inserted from the side into the mould and this arrangement alone considerably restricts the shapes which can be moulded to ones having one or a number of non-interconnected elongate parallel portions.

The present invention will be more clearly understood from the following description of some embodiments thereof given by way of example only with reference to the accompanying drawings in which:

Fig. 1 is a perspective cut-away view of portion of a window frame and sill,

Fig. 2 is a front plan view of the top half of a mould forming part of a moulding apparatus according to the invention,

Fig. 3 is a perspective view of the bottom half of the mould,

Fig. 4 is a typical cross-sectional view through an enclosed mould,

Fig. 5 is a plan view of the bottom half of the mould showing inflatable tubing in position,

Figs. 6 to 8 are diagrammatic views showing different arrangements of inflatable tubing,

Fig. 9 is a cross-sectional view of a connector for connecting two lengths of tubing,

Fig. 10 is a plan view of portion of the mould shown in Figure 3,

Fig. 11 is a cross-sectional view of another construction of mould, and

Fig. 12 is a cross-sectional view of portion of a frame.

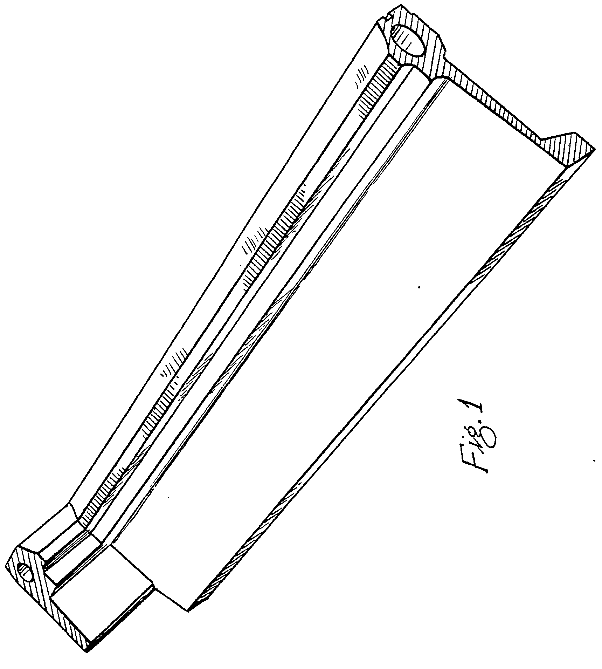

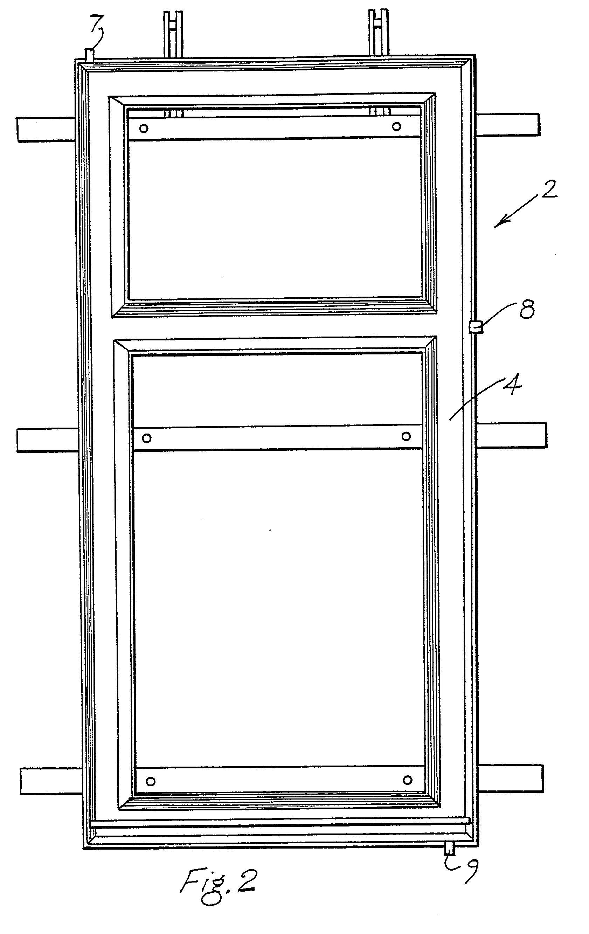

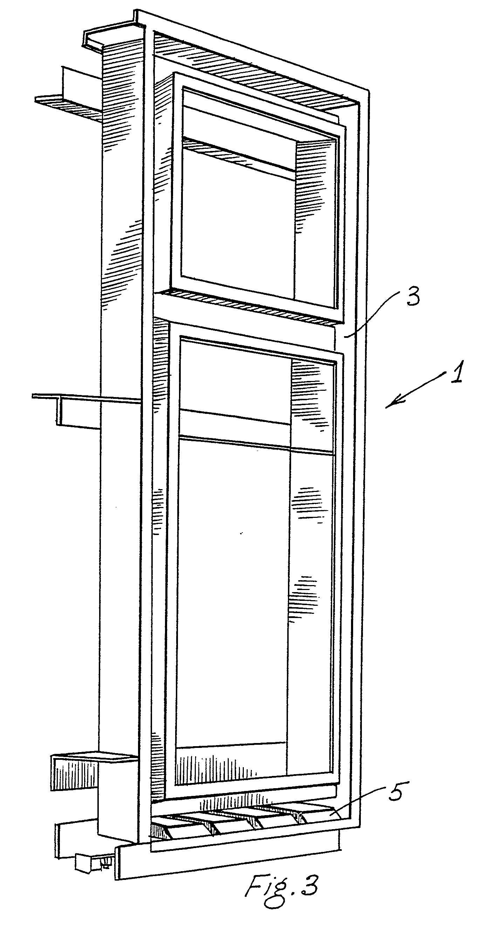

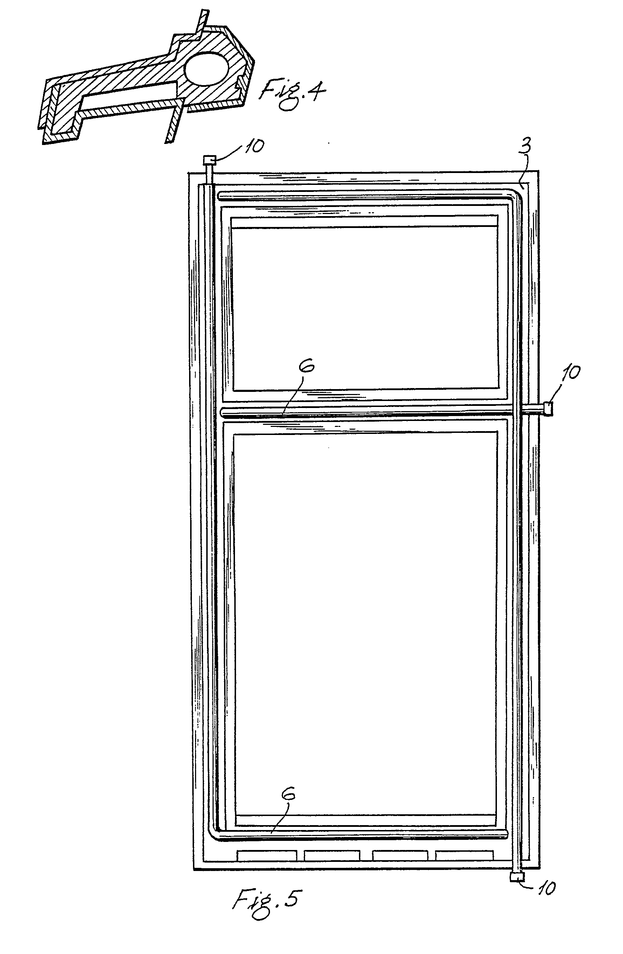

Referring to the drawings and initially to Figs. 1 to 5 thereof there is provided a moulding apparatus for moulding a frame of cementitious fibrous material in this instance a window frame of which portion of the bottom, an upright and the window sill is illustrated in Figure 1 the cross-section of one portion being shown in Figure 4.

The moulding apparatus includes a mould having mould parts 1, 2 which cooperate together when the mould is closed to provide a frame cavity, which cavity comprises a plurality of interconnecting elongate portions for forming corresponding interconnected elongate portions of the frame. As illustrated the mould parts comprise a bottom mould half indicated generally by the reference numeral 1 and a top mould half, indicated generally by the reference numeral 2. The top mould half 1 and the bottom mould half 2 have half mould cavities 3 and 4 respectively which together form a frame cavity when the mould is closed. The bottom mould half 1 includes a removable bottom plate 5 so that the sill can be formed. The necessity of this will be readily apparent from an examination of Figure 1 where it will be appreciated that if the bottom plate 5 is not removable from the mould the window sill could not be released. The top mould half 2 is provided with holes 7, 8 and 9 to allow flexible inflatable tubing 6, which is led around interconnected elongate portions of the frame cavity as a core member, to project outside the mould when it is closed. The tubing comprises respective tubing, each length of which is sealed at one end and provided with an air inlet 10 at the other end. A suitable air supply and auxiliary supply lines for delivering air into each length of tubing 6 is provided but is not shown as it is again of conventional construction. In use, a mixture of water and a fibrous reinforced cementitious material, in this embodiment glass fibre reinforced cement (GRC), is placed in the mould cavities 3 and 4 of the two mould halves 1 and 2. When the mould halves 1 and 2 are filled they are vibrated. A former to the approximate external shape of the tubing 6 is pressed into the top of the mixture in one of the mould halves. The tubing 6 is then positioned in this recess on the mixture in that mould half as illustrated in Figure 5. The mould halves are again vibrated slightly to allow the mixture to compact somewhat and the mould halves are brought together to close the mould. In so closing the mould, the tubing 6 is covered with further mixture from the other mould half. The closed mould is again vibrated slightly.

Air is introduced into the mould at a pressure of at least 50 psi (7.25 × 10⁻³ Pascal). The mixture is compressed and water is expelled from the mould as the tubing 6 is inflated. When the cementitious mixture has set there is formed a moulded article having a hollow core. The tubing 6 may then be deflated and withdrawn.

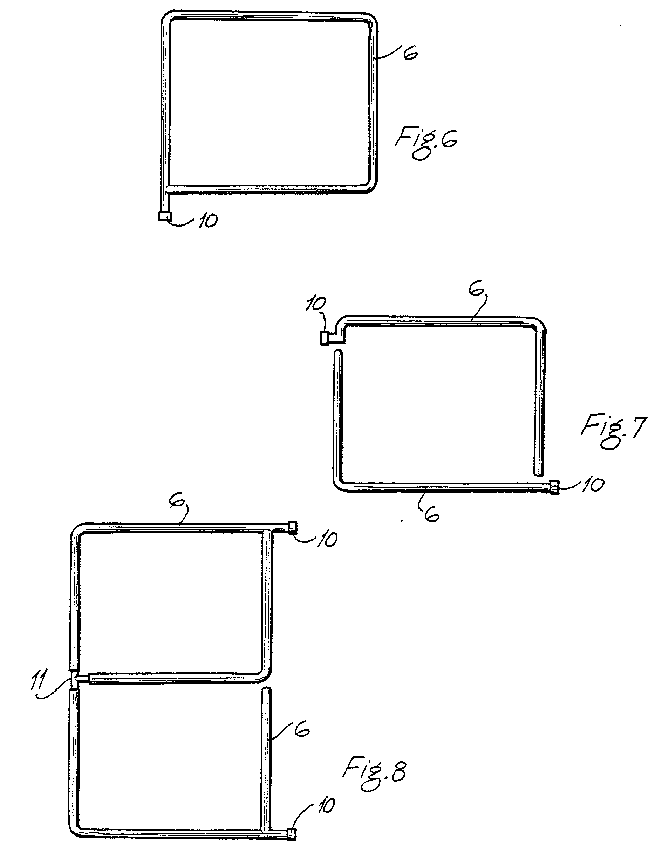

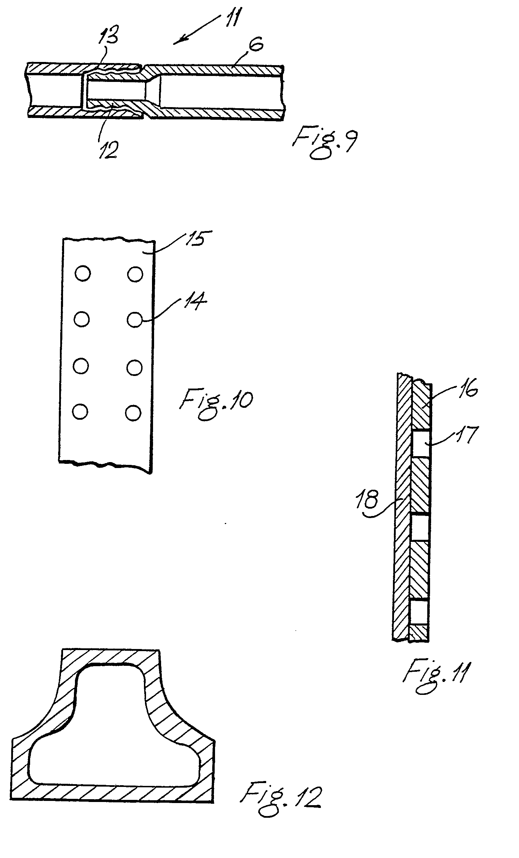

Referring to Figure 6 there is illustrated an alternative construction of core member manufactured from the one piece of tubing to form a single rectangular frame. Such a core member would generally be formed from a disposable cheap material such as a plastics material and would be left in the hollow core after use. Removable core members may be manufactured from any flexible impermeable material such as rubber. Figure 7 shows an arrangement similar to Figure 6 except that now two separate removable lengths of tubing are used. In Figure 8 there is illustrated a still further arrangement in which the core member is formed from tubing which is formed from a plurality of lengths of tubing interconnection means 11 being provided between the lengths of tubing. The interconnection means 11 is illustrated in more detail in Figure 9 and is simply a push-on pull-off fitting having a male part 12 and a female part 13. This allows the tubing to be removed easily after the mixture has set.

While in the embodiment above the dewatering is achieved through the joint between the two mould halves it could equally well be achieved by any form of de-watering apertures or the like. A typical example of de-watering apertures would be a plurality of holes formed in either mould half such as the holes 14 in a mould wall 15 as illustrated in Figure 10. Referring to Figure 11 an alternative construction of mould wall 16 is illustrated having a plurality of holes 17. The inside of which are covered by a de-watering membrane 18. Needless to say, such a de-watering membrane 18 can form, if necessary, portion of the mould walls.

It has been found that in using a relatively flexible tubing for the core member the tubing on inflation tends to take up the shape of the elongate portions of the mould as it were mirroring the inner shape of the mould thus producing elongate portions with a hollow core somewhat of the shape illustrated in Figure 12. That is the interconnected elongate portions of the frame are formed in the interconnected elongate portions of the frame cavity around the inflated tubing with a substantially uniform wall thickness of fibrous reinforced cementitious material.

While the method and apparatus described above has been for moulding GRC it will be appreciated that other fibrous reinforced cementitious material may be used. Ideally, when GRC is used, the glass fibre should be of the so-called alkali resistant type.

It has been found that it may in certain cases be advantageous to allow the cementitious mixture to partially set before the core member is inflated.

In the embodiment described above when the cementitious material was set the tubing 6 was deflated and withdrawn from the hollow core. However, the tubing need not be withdrawn from the hollow core on deflation but may remain within the hollow core. This is particularly advantageous where the tubing is manufactures from a disposable cheap material such as light plastics.

When the frame has been moulded the hollow core may be filled by an infill material. A suitable infill material needless to say, would be a heat insulation material particularly for frames such as window frames.

One rather surprising result has been achieved with the present invention is that it has been found that there has been no reduction in strength when a split mould has been used and that indeed there has been an improved surface finish. It has been found that where instead of a split mould a mould has been used for example, with a top cover plate or the like, that the surface of the moulded article corresponding to where the cover or closure plate had been placed is not as good as the surface finish on the remainder of the article. However, this problem does not appear to arise when the mould is a split mould. It has however, been found that the interior surface of the core is not finished to as high a finish as would be expected and it appears, though it has not as of yet been proven conclusively, that a certain amount of the entrained air in the GRC is entrained around the sides of the core member and is not expelled out of the mould. It will be readily appreciated by those skilled in the art that it is surprising that the surface finish with a split mould should be better than that for example, with a top filling mould.

A particularly suitable method of inflating the tubing 6 is to inflate it with hot water which hot water can be left some time in the core to cure the cementitious mixture. Ideally, the hot water should be continuously circulated. It has also been found that the tubing 6 may be inflated by means of a settable infill material introduced under pressure into the tubing 6. Such suitable materials include for example, foamed plastics materials and ideally such a settable material is a heat insulation material.

It has further been found that the tubing 6 may be inflated by introducing two reactable materials which on reaction produce a gas and hence an internal pressure in the core member. Such reactable material is set and are left in the tubing. For example, it is known that if aluminium powder and a rubber laytex solution or polyvinyl-chloride mixture is mixed with lime and water that the mixture will produce hydrogen by a reaction with the aluminium.

We have found that the tubing 6 should be inflated ideally 50 psi ($7.25 \times 10^{-3}$ Pascal) or more but very low pressures may be used. A pressure of at least 5 psi ($7.25 \times 10^{-4}$ Pascal) is however desirable.

It will be appreciated that the present invention is particularly suitable for the manufacture of elongate narrow parts. Such elongate parts include frames in general and include long interconnecting and intersecting parts.

It will be appreciated that in accordance with the present invention in addition to obtaining the advantages heretofore known in providing for example, windows and window frames and the like from GRC or other fibrous reinforced cementitious material that there are certain particular advantages with the present methods of moulding. In addition to the improvement in surface finish it had been found that because the core tends to mirror the outer shape of the article that a reduction in the amount of material normally required may be achieved thus reducing the weight of the article. In addition to this saving of material it will be appreciated that the core, being hollow can act itself as a heat insulator or alternatively may be filled with an infill material thus further improving the heat insulation properties of the article.

## Claims

1. A method of moulding a frame of a fibrous reinforced cementitious material in a mould having mould parts (1, 2) which cooperate together when the mould is closed to provide a frame cavity (3, 4) which cavity comprises a plurality of interconnected elongate portions for forming corresponding interconnected elongate portions of the frame, the method comprising the steps of

mixing a fibrous reinforced cementitious material with water,

filling the frame cavity (3, 4) with the mixture,

closing the mould (1, 2), and

applying pressure to the mixture to consolidate the material within the frame cavity (3, 4),

characterised in that the pressure is applied to the mixture by flexible inflatable tubing (6) led around interconnected elongate portions of the frame cavity (3, 4), which tubing is introduced into the mould (1, 2) before the mould is closed, the tubing (6) being positioned on fibrous reinforced mixture in a mould cavity (3 or 4) of one of the mould parts (1, 2), and subsequently covered with further mixture, and the tubing (6) being inflated after the mould (1, 2) is closed to form said interconnected elongate portions of the frame in said interconnected elongate portions of the frame cavity around the inflated tubing with a substantially uniform wall thickness of said fibrous reinforced cementitious mixture.

2. A method as claimed in claim 1, wherein the tubing (6) is deflated and left in the frame after the cementitious mixture has set.

3. A method as claimed in claim 1 or 2, wherein prior to the tubing (6) being positioned on fibrous reinforced mixture in said mould cavity (3 or 4), a former to the approximate external shape of the tubing is inserted into the mixture to form a void for reception of the tube (6).

4. A method as claimed in claim 1, 2 or 3, wherein the fibrous reinforced cementitious material is a glass fibre reinforced cement.

5. A moulding apparatus for performing a method of moulding a frame of a fibrous reinforced cementitious material as claimed in claim 1, said apparatus comprising a mould having mould parts (1, 2) which cooperate together when the mould is closed to provide a frame cavity (3, 4) which cavity comprises a plurality of interconnected elongate portions for forming corresponding interconnected elongate portions of the frame and means (6) for applying pressure to a fibrous cementitious mixture in the frame cavity during moulding to consolidate the material in the frame cavity, characterised in that said pressure applying means comprises inflatable flexible tubing (6) adapted to be led around interconnected elongate portions of the frame cavity (3, 4) prior to closure of the mould by being positioned on fibrous reinforced cementitious mixture in a mould cavity (3 or 4) of one of the mould parts (1, 2) for subsequently covering with further mixture.

6. An apparatus as claimed in claim 5, further including a former corresponding approximately to the external shape of the tubing for forming a void in the mixture in the mould cavity (3 or 4), for reception of the tubing (6).

7. An apparatus as claimed in claim 5 or 6, wherein the tubing (6) is formed from a plurality of lengths of tube, interconnecting means (11) being provided between the lengths.

8. Apparatus as claimed in claim 7, wherein the interconnection means comprises a push-on pull-off connector (11).

9. Apparatus as claimed in any one of claims 5 to 8, wherein a de-watering aperture is formed along a joint between the mould parts (1, 2).

## Revendications

1. Procédé de moulage d'un encadrement en un matériau cimentaire fibreux renforcé dans un moule ayant des parties de moule (1, 2) qui coopèrent quand le moule est fermé pour former une cavité (3, 4) de l'encadrement, laquelle cavité comprend un certain nombre de parties allongées interconnectées pour former des parties allongées interconnectées correspondantes de l'encadrement, le procédé comprenant les étapes de:
mélanger un matériau cimentaire fibreux renforcé avec de l'eau,
remplir la cavité d'encadrement (3, 4) du mélange,
fermer le moule (1, 2) et
appliquer de la pression au mélange pour consolider le matériau dans la cavité (3, 4) de l'encadrement,
caractérisé en ce que la pression est appliquée au mélange par un tubage flexible gonflable (6) guidé autour des parties allongées interconnectées de la cavité (3, 4) de l'encadrement, lequel tubage est introduit dans le moule (1, 2) avant la fermeture du moule, le tubage (6) étant placé sur le mélange fibreux renforcé dans une cavité du moule (3 ou 4) de l'une des parties du moule (1, 2) et subséquemment couvert du mélange, et le tubage (6) étant gonflé après fermeture du moule (1, 2) pour former lesdites parties allongées interconnectées de l'encadrement dans lesdites parties allongées interconnectées de la cavité de l'encadrement autour du tubage gonflé avec une épaisseur de paroi sensiblement uniforme dudit mélange cimentaire renforcé fibreux.

2. Procédé selon la revendication 1 caractérisé en ce que le tubage (6) est dégonflé et laissé dans l'encadrement après prise du mélange cimentaire (3).

3. Procédé selon la revendication 1 ou 2, où avant de placer le tubage (6) sur le mélange fibreux renforcé dans ladite cavité du moule (3 ou 4), un formeur à la forme approximative externe du tubage est inséré dans le mélange pour former un vide pour la réception du tube (6).

4. Procédé selon la revendication 1, 2 ou 3, où le matériau cimentaire renforcé fibreux est un ciment renforcé de fibres de verre.

5. Dispositif de moulage pour la mise en oeuvre d'un procédé de moulage d'un encadrement en un matériau cimentaire renforcé fibreux selon la revendication 1, ledit dispositif comprenant un moule ayant des parties de moule (1, 2) qui coopèrent lorsque le moule est fermé pour former une cavité d'encadrement (3, 4), laquelle cavité comprend un certain nombre de parties allongées interconnectées pour former des parties allongées interconnectées correspondantes de l'encadrement et un moyen (6) pour appliquer de la pression à un mélange cimentaire fibreux dans la cavité de l'encadrement pendant le moulage pour consolider le matériau dans la cavité de l'encadrement, caractérisé en ce que ledit moyen d'application de pression comprend un tubage flexible gonflable (6) adapté à être guidé autour des parties allongées interconnectées de la cavité (3, 4) de l'encadrement avant fermeture du moule en étant placé sur le mélange cimentaire renforcé fibreux dans une cavité du moule (3 ou 4) de l'une des parties du moule (1, 2) pour recouvrement subséquent par du mélange en supplément.

6. Dispositif selon la revendication 5, comprenant de plus un formeur correspondant à peu près à la forme externe du tubage pour former un vide dans le mélange dans la cavité du moule (3 ou 4), pour réception du tubage (6).

7. Disposif selon la revendication 5 ou 6, où le tubage (6) est formé d'un certain nombre de longueurs de tube, des moyens d'interconnexion (11) étant prévus entre les longueurs.

8. Dispositif selon la revendication 7 où le moyen d'interconnexion comprend un connecteur à pousser-détacher (11).

9. Dispositif selon l'une des revendications 5 à 8 où une ouverture de déshydratation est formée le long d'un joint entre les parties (1, 2) du moule.

## Patentansprüche

1. Verfahren zum Formen eines Rahmens aus einem faserverstärkten zementhaltigen Material in einer Form, welche Formteile (1, 2) aufweist, die zusammenwirken, wenn die Form zur Bildung eines Rahmenhohlraums (3, 4) geschlossen ist, welcher Hohlraum eine Vielzahl von miteinander verbundenen länglichen Abschnitten zur Bildung entsprechender, miteinander verbundener länglicher Abschnitte des Rahmens aufweist, wobei ein faserverstärktes, zementhaltiges Material mit Wasser vermischt wird, dann der Rahmenhohlraum (3, 4) mit der Mischung gefüllt, die Form (1, 2) geschlossen und Druck auf die Mischung ausgeübt wird, um das Material in dem Rahmenhohlraum (3, 4) zu verdichten, dadurch gekennzeichnet, daß der Druck auf die Mischung durch eine flexible, aufblasbare Rohranordnung (6) ausgeübt wird, die um miteinander verbundene längliche Abschnitte des Rahmenhohlraums (3, 4) herumgeführt ist, daß die Rohranordnung in die Form (1, 2) eingeführt wird, bevor die Form geschlossen wird, daß die Rohranordnung (6) auf der faserverstärkten Mischung in einem Formhohlraum (3 oder 4) eines der Formteile (1, 2) angeordnet wird und danach mit weiterer Mischung bedeckt wird, und daß die Rohranordnung (6) aufgeblasen wird, nachdem die Form (1, 2) geschlossen wurde, um die miteinander verbundenen länglichen Abschnitte des Rahmens in den miteinander verbundenen länglichen Abschnitten des Rahmenhohlraums um die aufgeblasene Rohranordnung herum mit im wesentlichen gleichförmiger Wanddicke der faserverstärkten zementhaltigen Mischung zu formen.

2. Verfahren nach Anspruch 1, dadurch gekennzeichnet, daß die Rohranordnung (6) entlüftet und in dem Rahmen belassen wird, nachdem die zementhaltige Mischung ausgehärtet ist.

3. Verfahren nach Anspruch 1 oder 2, dadurch gekennzeichnet, daß ein Formelement mit der ungefähren Außengestalt der Rohranordnung in die Mischung zur Bildung eines Raums zur Aufnahme der Rohranordnung (6) eingesetzt wird, bevor die Rohranordnung (6) auf der faserverstärkten Mischung in dem Formhohlraum (3 oder 4) angeordnet wird.

4. Verfahren nach Anspruch 1, 2 oder 3, dadurch gekennzeichnet, daß das faserverstärkte zementhaltige Material ein glasfaserverstärkter Zement ist.

5. Formvorrichtung zur Ausführung eines Verfahrens zur Formung eines Rahmens aus faserverstärktem zementhaltigem Material nach Anspruch 1, mit einer Form, welche Formteile (1, 2) aufweist, die bei geschlossener Form zusammenwirken, um einen Formhohlraum (3, 4) zu bilden, der eine Vielzahl von miteinander verbundenen länglichen Abschnitten zur Bildung entsprechender, miteinander verbundener länglicher Abschnitte des Rahmens umfaßt, und mit einer Einrichtung (6) zur Anlegung von Druck an eine faserige, zementhaltige Mischung in dem Rahmenhohlraum während der Formung, um das Material in dem Rahmenhohlraum zu verdichten, dadurch gekennzeichnet, daß die Druckanlegeeinrichtung eine aufblasbare flexible Rohranordnung (6) umfaßt, die dazu ausgebildet ist, daß sie um miteinander verbundene längliche Abschnitte des Rahmenhohlraums (3, 4) vor dem Schließen der Form dadurch herumgeführt werden kann, daß sie auf der faserverstärkten zementhaltigen Mischung in einem Formhohlraum (3 oder 4) eines der Formteile (1, 2) zur nachfolgenden Bedeckung mit weiterer Mischung angeordnet wird.

6. Vorrichtung nach Anspruch 5, dadurch gekennzeichnet, daß ein Formelement, das ungefähr der Außengestalt der Rohranordnung entspricht, vorgesehen ist, um einen Leerraum in der Mischung in dem Formhohlraum (3 oder 4) zur Aufnahme der Rohranordnung (6) zu formen.

7. Vorrichtung nach Anspruch 5 oder 6, dadurch gekennzeichnet, daß die Rohranordnung (6) aus einer Vielzahl von Rohrstücken geformt ist, wobei zwischen den Stücken Verbindungseinrichtungen (11) vorgesehen sind.

8. Vorrichtung nach Anspruch 7, dadurch gekennzeichnet, daß die Verbindungseinrichtungen aus einem zusammenschiebbaren und auseinanderziehbaren Verbinder (11) bestehen.

9. Vorrichtung nach einem der Ansprüche 5 bis 8, dadurch gekennzeichnet, daß eine Entwässerungsöffnung entlang einer Verbindung zwischen den Formteilen (1, 2) geformt ist.

Fig. 1

1

Fig.2

Fig. 3

Fig.4

Fig.5

Fig.6

Fig.7

Fig.8

13

11

6

Fig.9

12

15

14

Fig.10

16

17

18

Fig.11

Fig.12